Europäisches Patentamt

European Patent Office

Office européen des brevets

(19)

(11) Veröffentlichungsnummer: **0 111 847**
**B1**

(12) **EUROPÄISCHE PATENTSCHRIFT**

(45) Veröffentlichungstag der Patentschrift: **23.03.88**

(51) Int. Cl.⁴: **B 62 D 11/08**

(21) Anmeldenummer: **83112399.7**

(22) Anmeldetag: **09.12.83**

(54) **Lenkeinrichtung für selbstfahrende Arbeitsmaschine.**

(30) Priorität: **23.12.82 CH 7524/82**

(43) Veröffentlichungstag der Anmeldung:
**27.06.84 Patentblatt 84/26**

(45) Bekanntmachung des Hinweises auf die
Patenterteilung:
**23.03.88 Patentblatt 88/12**

(84) Benannte Vertragsstaaten:
**AT DE FR IT**

(56) Entgegenhaltungen:
**CH-A- 629 432**
**DE-A-3 014 136**
**FR-A- 641 671**
**FR-A- 818 726**
**FR-A- 997 571**
**FR-A-1 255 108**
**US-A-2 605 653**
**US-A-3 581 600**

(73) Patentinhaber: **BUCHER-GUYER AG
Maschinenfabrik
CH-8166 Niederweningen/Zürich (CH)**

(72) Erfinder: **Scholtes, Willi
Sandbuck 387
CH-5425 Schneisingen (CH)**

EP 0 111 847 B1

Courier Press, Leamington Spa, England.

## Beschreibung

Die Erfindung betrifft eine Lenkeinrichtung für selbstfahrende Arbeitsmaschine, deren angetriebene Fahrachse einerseits mit dem Motor verbunden und andererseits mittels einem festsitzenden Sonnenrad eines einem Antriebsrad zugeordneten Planetengetriebes versehen ist, wobei die jeweils an einem Ende der angetriebenen gelagerte, als Planetenradträger vorgesehene Radnabe und das mit dem bzw. den Planetenrädern kämmende, auf der Fahrachse neben der Radnabe gelagerte Hohlrad mit jeweils einer von einem Bremsband betätigbaren Bremstrommel versehen und als Teile eines Getriebegehäuses ausgebildet sind.

Solche Lenkeinrichtungen werden vornehmlich bei starren Achsen an Fahrzeugen und fahrbaren Geräten verwendet, deren Räder zum Lenken nicht schwenkbar sind. Auch Gleiskettenfahrzeuge sind mit derartigen Lenkeinrichtungen versehen.

Es ist u.a. durch die FR—A—641 671 eine Lenkeinrichtung für eine selbstfahrende Arbeitsmaschine bekannt, deren angetriebene Fahrachse einerseits mit dem Motor verbunden und andererseits mittels einem festsitzenden Sonnenrad eines einem Antriebsrad zugeordneten Planetengetriebes versehen ist. In dieser bekannten Lenkeinrichtung sind die jeweils an einem Ende der angetriebenen Fahrachse gelagerten, als Planetenradträger vorgesehenen Radnaben und die mit den Planetenrädern kämmenden, auf der Fahrachse neben den Radnaben gelegerten Hohlräder als Bremsorgane ausgebildet.

Solche Lenkeinrichtungen sind aufgrund ihres Einsatzes im unwegsamen Gelände einer starken Verschmutzung ausgesetzt, durch die ihre Funktionsfähigkeit leidet und die Verschleisserscheinungen gefördert werden. Dadurch sind relativ hohe Aufwendungen zur Behebung und zum Schutz der Lenkeinrichtung erforderlich.

Aufgabe der vorliegenden Erfindung ist es, diese Mängel zu beheben und eine Lenkeinrichtung zu schaffen, mit der eine an die Anforderungen gestellte hohe Zuverlässigkeit und Sicherheit im Betrieb erreicht werden kann.

Erfindungsgemäss wird diese Aufgabe dadurch gelöst, dass die Fahrachse und das für das Planetengetriebe vorgesehene, aus Radnabe und Hohlrad gebildete Getriebegehäuse mit einer Dichtungsanordnung versehen sind.

Die Merkmale und Einzelheiten der Erfindung sind in der anschliessenden Beschreibung erörtert und in der Zeichnung dargestellt. Es zeigen:

Fig. 1 eine Seitenansicht einer mit der erfindungsgemässen Lenkeinrichtung versehenen Arbeitsmaschine,

Fig. 2 eine Draufsicht auf die Arbeitsmaschine gemäss Fig. 1 und

Fig. 3 eine schematische Darstellung der Lenkeinrichtung.

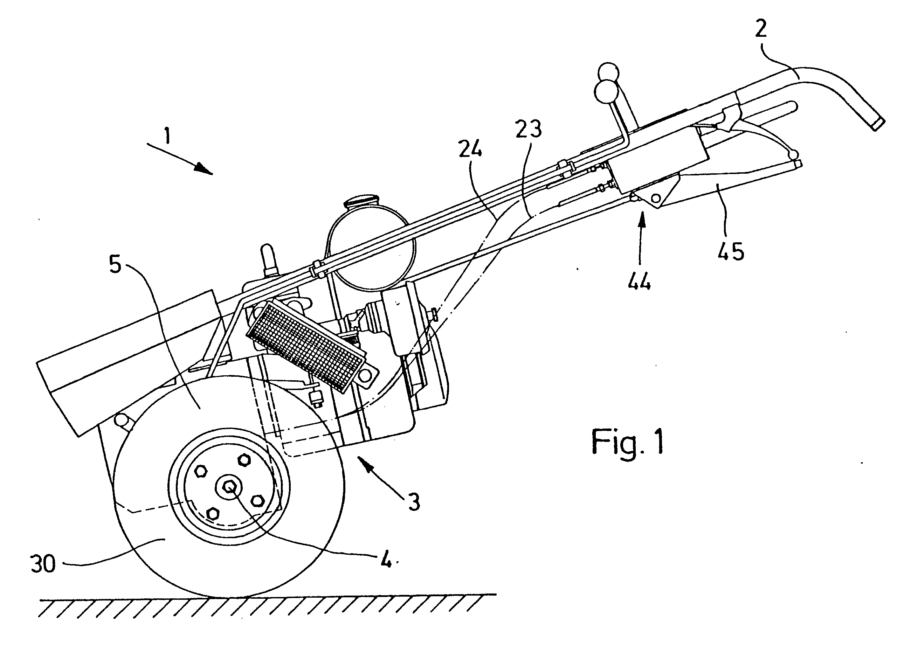

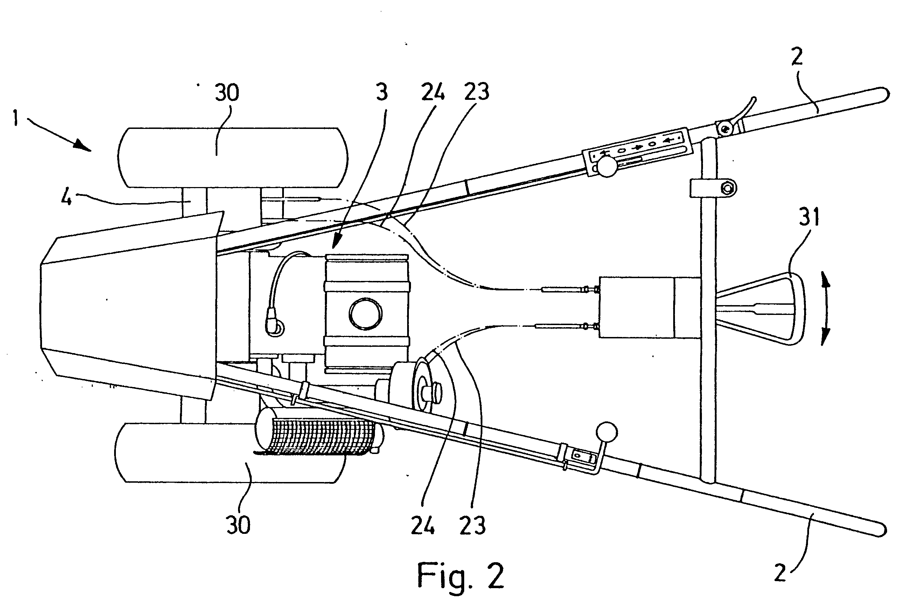

In den Fig. 1 bis 3 ist dieselbe selbstfahrende, einachsige Arbeitsmaschine 1 dargestellt, die an Holmen 2 lenkbar ist und an der Frontseite mit Geräten, wie z.B. Mähwerk, Rechwender, Schneeräumschild, Schneefräse u.a.m. versehen werden kann. Sie kann auch als Zugfahrzeug verwendet werden. Diese Arbeitsmaschine besitzt einen Motor 3, der an dem über der Fahrachse 4 der Arbeitsmaschine 1 angeordneten Schaltgetriebe 5 befestigt ist. Letzteres weist mehrere zuschaltbare Vorwärtsgänge und einen Rückwärtsgang sowie den Zapfwellenantrieb an der Frontseite auf. Der Antrieb der Fahrachse 4 am Ausgang des Schaltgetriebes 5 erfolgt mittels Schneckenradgetriebe 7, wobei die Schnecke 7 als treibendes Organ im Schaltgetriebe gelagert und das getriebene Schneckenrad 8 an der Fahrachse 4 befestigt ist. Letztere ist im Gehäuse 9 des Schaltgetriebes 5 gelagert.

Auf beiden Seiten des Schaltgetriebes 5 ist auf der Fahrachse 4 jedem Antriebsrad 30 zugeordnet ein Sonnenrad 10 eines Planetengetriebes 11 befestigt, dessen Planetenrad 12 bzw. Planetenräder an der den Planetenradträger bildenden Radnabe 13 an einer Welle 14 bzw. Wellen gelagert ist bzw. sind. Die Radnaben 13 sind jeweils am Ende der Fahrachse 4 wälzgelagert und weisen ein geringes axiales Spiel auf. Das jeweils einem Planetengetriebe 11 zugeordnete Hohlrad 15 ist zwischen Gehäuse 9 und Sonnenrad 10 auf der Fahrachse 4 drehbar gelagert und kämmt mit dem bzw. den Planetenrädern 12. Die benachbarte Radnabe 13 besitzt eine zu ihrer Drehachse hin abgesetzte Schulter 16 auf der die vom Hohlrad 15 aufgenommene Wellendichtung 17 ruht. Das Hohlrad 15 und die Radnabe 13 sind gegenüber der Fahrachse 4 mit einer Dichtung (nicht gezeigt) versehen und bilden zusammen das öldichte Planetengetriebegehäuse 18.

An ihrem Umfang sind Radnabe 13 und Hohlrad 15 als Bremstrommeln 19, 20 ausgebildet, die von bremsend anlegbaren Bremsbändern 21, 22 umschlungen sind. Die Betätigung der Bremsbänder 21, 22 erfolgt über Kabelzüge 23, 24, die mit einer Betätigungseinrichtung 25 verbunden sind. Die Bremsbandbetätigung wird einerseits von der Betätigungseinrichtung 25 aus und andererseits durch einen jedem Bremsband zugeordneten Federmechanismus 26, 27 bewirkt.

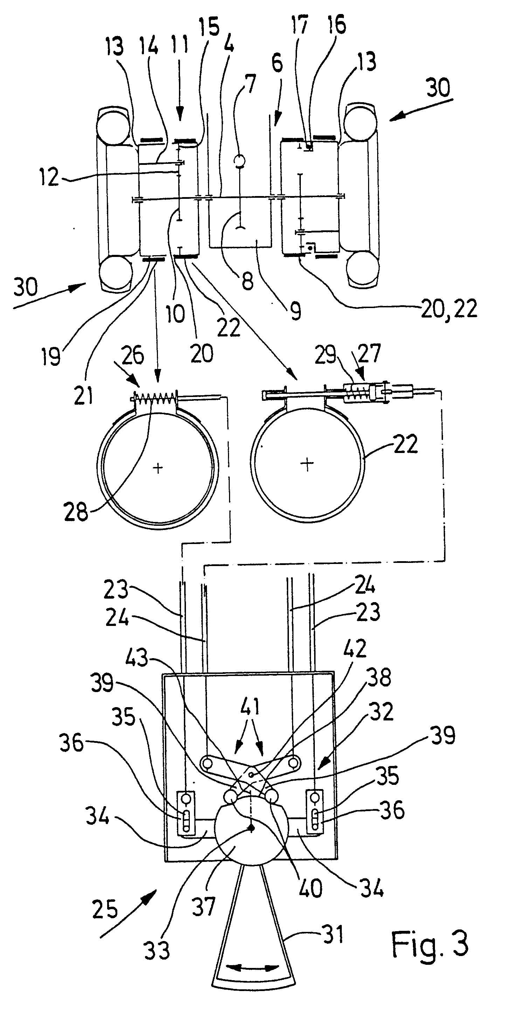

Ist die Betätigungseinrichtung 25 in Ruhelage, wie in Fig. 3 veranschaulicht, dann wird mittels Druckfeder 28 das der Bremstrommel 19 an der Radnabe 13 zugeordnete Bremsband 21 offen gehalten, während eine Druckfeder 29 das Bremsband 22 am Hohlrad 15 dessen Bremstrommel 22 fest umschliesst. Dies gilt für jeweils jede einem Rad 30 oder der Arbeitsmaschine 1 zugeordnete Lenkeinrichtung.

Die Betätigung der Bremstrommeln 19, 20 jeweils eines Antriebsrades 30 erfolgt wechselweise zusammenwirkend und abhängig mit der dem anderen Rad 30 zugeordneten Bremstrommeln.

Zu diesem Zwecke ist bei der Bremstrommel 19 der Radnabe 13 die Druckfeder 28 zwischen den Enden des Bremsbandes 21 angeordnet und hält dieses in Ruhelage der Lenkeinrichtung offen, während die Druckfeder 29 am Bremsband 22 der dem Hohlrad 15 zugeordneten Bremstrommel 20 mit ihrer von aussen einwirkenden Kraft durch das Bremsband 22 diese Bremstrommel 20 anliegend umfasst.

Dieser Zustand wird wechselweise auf die Bremstrommeln 19, 20 jeder einem antreibbaren Rad 30 zugeordneten Lenkeinrichtung ausgeübt, wobei diese gemeinsam von der Betätigungseinrichtung 25 aus bedient werden. Diese Funktionen werden durch den von Hand betätigbaren Schwenkhebel 31 eines Hebelgetriebes 32 eingeleitet, das seitlich von der Schwenkachse 33 des Schwenkhebels 31 und mit diesem verbundene, abstehende Hebelarme 34 aufweist, die über jeweils einen Kabelzug 23 mit den Bremsbändern 21 beider Radnaben 13 verbunden sind. Diese Hebelarme 34 sind dann auf das entsprechende Bremsband 21 wirksam, wenn sie in eine zurückverschwenkte Lage versetzt sind, d.h. es kann jeweils nur einer dieser Hebelarme 34 wirksam sein, während das dem anderen Rad 30 zugeordnete gleichartige Bremsband 21 durch die Druckfeder 28 beaufschlagt wird, wobei zur Aufhebung der Wirkung des anderen Kabelzuges 23 jeweils ein Schlitz 35 in der zwischen Kabelzug 23 und Hebelarm 34 vorgesehenen Verbindungslasche 36 angeordnet ist. Mit dem Schwenkhebel 31 ist eine konzentrisch gelagerte Steuerscheibe 37 verbunden, die an ihrem Umfang eine Steuerkurve 38 aufweist. Diese Steuerkurve 38 ist symmetrisch auf die durch die Achse der Steuerscheibe 37 und den Schwenkhebel 31 verlaufende Längsachse seitlich verteilt und an der Steuerscheibe 37 vorn angeordnet. Sie ist aus einem an den wirksamen, kreisförmigen Umfang der Steuerscheibe 37 stetig übergehenden Kreisabschnitt kleineren Durchmessers gebildet. An dieser Steuerkurve 38 liegt jeweils auf jeder Seite der Symmetrieachse 43 eine am Hebelarm 39 eines Doppelhebels 41 gelagerte Steuerrolle 40 an, die zur Betätigung der Bremsbänder 22 an der Bremstrommel 20 des Hohlrades 15 vorgesehen sind. Die Doppelhebel 41 weisen eine gemeinsame vertikale Schwenkachse 42 auf, die in der Symmetrieachse 43 liegt.

Bei der Fortbewegung der Arbeitsmaschine 1 wird durch das seitliche Verschwenken des Schwenkhebels 31 die Fahrtrichtung geändert, d.h. wird der Schwenkhebel 31 auf die linke Seite der in Fig. 3 dargestellten Arbeitsmaschine geschwenkt, dann folgt die Maschine einer Rechtskurve; wird der Schwenkhebel 31 nach rechts versetzt, verläuft die Maschine nach links.

Anhand der Fig. 3 erörtert heisst dies, dass bei nach rechts verschwenktem Schwenkhebel 31, Hebelarm 34 zurückgezogen wird und über den Kabelzug 23 wird das Bremsband 21 an die Bremstrommel 19 der Radnabe 13 angepresst. Die ausgelenkte Position des Schwenkhebels 31 bestimmt bei diesem Vorgang das Mass der Abbremsung des linken Rades 30 bis zum Stillstand. Bei diesem Zustand öffnet über den Doppelhebel 41 das Bremsband 22 an der Bremstrommel 20 des Hohlrades 15, welches durch das Sonnenrad 10 des Planetengetriebes 11 in freie Drehung versetzt wird. Am rechten Rad 30 wird durch den ungespannten Kabelzug 23 durch die Druckfeder 26 das Bremsband 21 für die Radnabe 13 geöffnet und gibt das Rad zum Antrieb frei, während das zugeordnete Hohlrad 15 durch die auf den äusseren Bereich der Steuerkurve 38 aufgelaufene Steuerrolle 40 am Doppelhebel 41 mit dem Bremsband 22 abgebremst wird und so der direkte Antrieb vom Sonnenrad 10 über die Planetenräder 12 auf die Radnabe 13 erfolgt.

Der Reibungsschluss wird aufgrund des Abhängigkeitsverhältnisses durch das Hebelgetriebe 32 bestimmt, d.h. bei Stillsetzung eines Rades 30 dreht die Arbeitsmaschine an Ort, wogegen sie bei schleifendem Kontakt an den Bremstrommeln eine Kurve beschreibt.

In Ruhestellung der Arbeitsmaschine wie in Fig. 3 gezeigt, sind die Bremsbänder 21 von den Bremstrommeln 19 der Radnaben 13 gelöst und diejenigen 22 der Hohlräder 15 angezogen.

Ausgehend von diesem Zustand sind die Bremsbänder 21, 22 jeweils einzustellen bzw. nachzustellen.

Im übrigen könnten anstelle der Bremsbänder bzw. Bremstrommeln auch andere Bremsorgane verwendet werden. Als Stillstandbremse ist eine auf die Kabelzüge 23 der Radnaben 13 einwirkende Spannvorrichtung 44 vorgesehen, die mittels Spannhebel 45 durch eine am gegenüberliegenden Ende angeordnete Rolle oder einen Nocken die mit den Bremsbändern 21 verbundenen Zugkabel spannt.

**Patentansprüche**

1. Lenkeinrichtung für selbstfahrende Arbeitsmaschine, deren angetriebene Fahrachse (4) einerseits mit dem Motor verbunden und andererseits mittels einem festsitzenden Sonnenrad (10) eines einem Antriebsrad zugeordneten Planetengetriebes versehen ist, wobei die jeweils an einem Ende der angetriebenen Fahrachse (4) gelagerte, als Planetenradträger vorgesehene Radnabe (13) und das mit dem bzw. den Planetenrädern (12) kämmende, auf der Fahrachse (4) neben der Radnabe (13) gelagerte Hohlrad (15) mit jeweils einer von einem Bremsband betätigbaren Bremstrommel versehen und als Teile eines Getriebegehäuses ausgebildet sind, dadurch gekennzeichnet, dass die Fahrachse (4) und das für das Planetengetriebe (11) vorgesehene, aus Radnabe (13) und Hohlrad (15) gebildete Getriebegehäuse mit einer Dichtungsanordnung versehen sind.

2. Einrichtung nach Anspruch 1, dadurch gekennzeichnet, dass die Radnabe (13) eine gegenüber ihrer Bremstrommel (19) zur Achse hin zurückversetzt, dichtende Auflageschulter (16) für die am Hohlrad (15) angeordnete Wellendichtung (17) aufweist.

3. Einrichtung nach Anspruch 1 mit einer zur wechselweisen Betätigung der jeweils einem Antriebsrad zugeordneten Bremstrommel vorgesehenen Betätigungsvorrichtung, dadurch gekennzeichnet, dass in Ruhestellung bzw. bei Vorwärts- oder Rückwärtsfahrt der Arbeitsmaschine (1) die Offenstellung der den Radnaben (13) zugeordneten Bremsbändern (21) und die Bremswirkung der Bremsbänder (22) der Hohlräder (15) mittels Druckfeldern (28, 29) erfolgt, derart, dass die Betätigungseinrichtung (25 auf zwei Antriebsdrädern (30) wirkend als Hebelgetriebe (32) ausgebildet ist und einen betätigbaren Schwenkhebel (31) aufweist, der einerseits jeweils mit einem auf das Bremsband (19) der Radnabe (13) einwirkenden Hebelarm (34) verbunden ist und andererseits eine am Umfang einer Steuerscheibe (37) vorgesehene, symmetrische Steuerkurve (38) aufweist, an der jeweils eine an einem. Hebelarm (39) eines mit dem Bremsband (22) des Hohlrades (15) verbundenen Doppelhebels (41) gelagerte Steuerrolle (40) anliegt.

4. Lenkeinrichtung nach Anspruch 3, dadurch gekennzeichnet, dass die jedem Antriebsrad (30) zugeordneten Doppelhebel (41) eine gemeinsame Schwenkachse (42) aufweisen, die in der zur Fahrtrichtung verlaufenden Symmetrieachse (43) und vor der Steuerkurve (38) liegend angeordnet ist.

5. Lenkeinrichtung nach Anspruch 4, dadurch gekennzeichnet, dass die symmetrische Steuerkurve (38) aus einem konzentrischen, beidseits der Symmetrieachse an dem Umfang der Steuerscheibe (37) stetig übergehenden Kreisabschnitt geringeren Durchmessers gebildet ist.

**Revendications**

1. Mécanisme de direction pour machine automotrice dont l'axe moteur d'entraînement (4) est, d'une part, relié au moteur, et, d'autre part, muni du planétaire fixe (10) d'un train planétaire associé à une roue motrice, dans lequel le moyeu de la roue (13) qui est monté tournant à chaque extrémité de l'axe moteur d'entraînement (4) et qui est réalisé sous la forme d'un porte-satellite, ainsi que la couronne (15) dentée intérieurement qui engrène avec le ou les satellites (12) et qui est montée tournante sur l'axe moteur (4) à côté du moyeu (13) de la roue, sont munis chacun d'un tambour de frein pouvant être serré par un ruban de frein, et sont réalisés sous la forme d'éléments d'un carter de boîte d'engrenages, caractérisé par le fait que l'axe moteur (4) et le carter de boîte d'engrenages qui est prévu pour le train planétaire (11) et qui constitué par le moyeu (13) de la roue et la couronne dentée (15) sont munis d'un dispositif d'étanchéité.

2. Mécanisme selon la revendication 1, caractérisé par le fait que le moyeu (13) de la roue comporte en face de son tambour de frein (19) un épaulement (16) décalé vers l'axe pour servir d'appui à un joint de traversée d'arbre (17) monté sur la couronne dentée (15).

3. Mécanisme selon la revendication 1 comprenant un dispositif de commande qui est destiné à actionner alternativement les tambours de frein dont chacun est associé à une roue motrice, caractérisé par le fait que, lorsque la machine (1) est au repos ou en marche avant ou arrière, la position d'ouverture des rubans de frein (21) associés aux moyeux (13) des roues, ainsi que l'effet de freinage des rubans de frein (22) des couronnes dentées (15), ont lieu au moyen de ressorts de compression (28, 29), et ce, grâce au fait que le dispositif d'actionnement (25) est réalisé sous la forme d'une transmission à leviers (32) agissant sur deux roues motrices (30) et qu'il comporte un levier pivotant de commande (31) qui, d'une part, est relié à deux bras de levier (34) agissant chacun sur le ruban de frein (19) du moyeu (13) d'une roue, et, d'autre part, comporte une came de commande symétrique (38) qui est prévue sur le pourtour d'un disque de commande (37), et sur laquelle s'appuient deux galets de commande (40) dont chacun est monté tournant sur un bras de levier (39) d'un levier double (41) relié au ruban de frein (22) de la couronne dentée (15).

4. Mécanisme de direction selon la revendication 3, caractérisé par le fait que les leviers doubles (41) associés à chaque roue motrice (30) comportent un axe de pivotement commun (42) monté sur l'axe de symétrie (43) qui s'étend selon le sens de la marche, et en avant de la came de commande (38).

5. Mécanisme de direction selon la revendication' 4, caractérisé par le fait que la came de commande symétrique (38) est constituée par un secteur circulaire de plus faible diamètre qui rejoint progressivement le pourtour du disque de commande (37) des deux côtés de l'axe de symétrie.

**Claims**

1. A steering device for self-propelled machines, the driven axle (4) of which is, on the one hand connected to the engine and on the other hand provided with a stationary sun wheel (10) of an epicyclic gear associated with a driving wheel, wherein the wheel hub (13) mounted at each end of the driven axle (4) and provided in the form of a satellite carrier and the ring gear (15) meshing with the planet wheel or wheels (12) and mounted on the axle (4) beside the wheel hub (13) are each provided with a brake drum which can be actuated by a brake band and are constructed in the form of parts of a gear casing, characterised in that the axle (4) and the gear casing provided for the epicyclic gear (11) and formed from wheel hub (13) and ring gear (15) are provided with a sealing arrangement.

2. A device according to Claim 1, characterised in that the wheel hub (13) comprises a sealing supporting shoulder (16) for the radial packing ring (17) disposed on the ring gear (15), which shoulder (16) is set back towards the axle in relation to its brake drum (19).

3. A device according to Claim 1 having an actuating device provided for the alternate actuation of the brake drum associated with each driving wheel, characterised in that when the machine (1) is in the position of rest or during forward or reverse travel, the open position of the brake bands (21) associated with the wheel hubs (13) and the braking action of the brake bands (22) of the ring gears (15) is effected by means of compression springs (28, 29) in such a manner that the actuating device (25), acting on two driving wheels (30), is constructed in the form of a lever mechanism (32) and comprises a pivoted lever (31) which can be actuated and which, on the one hand is connected to lever arms (34) each of which acts on the brake band (19) of the wheel hub (13) and on the other hand comprises a symmetrical cam (38) which is provided at the circumference of a cam plate (37) and against which there bears a control roller (40) mounted on a lever arm (39) of a double lever (41) connected to the brake band (22) of the ring gear (15), in each case.

4. A steering device according to Claim 3, characterised in that the double levers (41) associated with each driving wheel (30) have a common pivotal axis (42) which is disposed horizontally in the axis of symmetry (43) extending in the direction of travel and in front of the cam (38).

5. A steering device according to Claim 4, characterised in that the symmetrical cam (38) is formed from a concentric segment of a circle of small diameter merging smoothly into the circumference of the cam plate (37) at both sides of the axis of symmetry.

Fig. 1

0 111 847

Fig. 2

0 111 847

Fig. 3

3